# EUROPÄISCHE PATENTANMELDUNG

(11) **EP 4 647 598 A1**
(43) Veröffentlichungstag der Anmeldung: **12.11.2025**
(21) Anmeldenummer: 24174413.5
(22) Anmeldetag: 07.05.2024
(51) Int. Cl.: F03D 80/80, F03D 9/25, F03D 80/50

(54) **KABELFÜHRUNG FÜR EINEN ROTOR EINES WINDKRAFTANLAGENGENERATORS**

(71) Anmelder: Flender GmbH, 46395 Bocholt (DE)
(72) Erfinder: SOLDO, Anton, 46395 Bocholt (DE); SIGL, Martin, 46395 Bocholt (DE); STANGL, Christian, 46395 Bocholt (DE)
(74) Vertreter: Michalski Hüttermann & Partner Patentanwälte mbB

(57) **Zusammenfassung**

Es ist eine Kabelführung (44) zum Anschließen von Phasenleitungen (36) an einen Rotor eines Generators (20) einer Windkraftanlage (10) vorgesehen mit einem Hohlrohr (46) zum axialen Einstecken in eine Rotorwelle (26) des Rotors, einem innerhalb des Hohlrohrs (46) vorgesehenen Teilungskörper (48), wobei der Teilungskörper (48) zusammenmit dem Hohlrohr (46) zumindest zu einem Großteil voneinander getrennte Durchlassquerschnitte (54) begrenzt und der jeweilige Durchlassquerschnitt (54) zur Durchführung von maximal einer der Phasenleitungen (36) dimensioniert ist. Durch die definiert vorgegebene Positionierung der Phasenleitungen (36) in dem jeweils zugehörigen Durchlassquerschnitt (54) kann auch ohne ausgehärtetes Füllmaterial die Relativlage der Phasenleitungen (36) in der Rotorwelle (26) des Rotors leicht montierbar und demontierbar vorgegeben werden, so dass ein reparaturfreundlicher elektrisch anschließbarer Rotor ermöglicht ist.

## Beschreibung

Die Erfindung betrifft eine Kabelführung, mit dessen Hilfe Phasenleitungen an Wicklungen eines Rotors für einen Generator einer Windkraftanlage angeschlossen werden können, sowie einen Rotor und einen Generator mit einer derartigen Kabelführung. Die Erfindung betrifft ferner eine Verwendung einer derartigen Kabelführung, ein Verfahren zur Reparatur eines Rotors mit Hilfe einer derartigen Kabelführung sowie ein Datenagglomerat zur additiven Fertigung und/oder Simulation einer derartigen Kabelführung.

Windkraftanlagen zur industriellen Erzeugung elektrischer Energie aus Windkraft können einen Generator aufweisen, dessen Rotor Wicklungen aufweist, die über Phasenleitungen elektrisch angeschlossen sind. Die Phasenleitungen können durch einen Hohlraum einer Rotorwelle des Rotors verlaufen, um zu den Wicklungen des Rotors geführt zu werden. Um die Phasenleitungen zu fixieren, ist es bekannt, die verbleibenden Zwischenräume in dem Hohlraum mit Hilfe eines Füllmaterials auszufüllen, indem die Rotorwelle vertikal ausgerichtet wird, das Füllmaterial im flüssigen Zustand in den Hohlraum der vertikal ausgerichteten Rotorwelle eingefüllt und nachfolgend ausgehärtet wird. Wenn jedoch ein Schaden an dem Rotor, insbesondere an den Phasenleitungen auftritt, ist es in der Regel erforderlich den gesamten Rotor auszubauen, wodurch sich hohe reparaturbedingte Stillstandzeiten bei der Windkraftanlage ergeben.

Es ist die Aufgabe der Erfindung Maßnahmen aufzuzeigen, die einen reparaturfreundlichen elektrisch anschließbaren Rotor ermöglichen.

Die Lösung der Aufgabe erfolgt durch eine Kabelführung mit den Merkmalen des Anspruchs 1, einen Rotor mit den Merkmalen des Anspruchs 10, einen Generator mit den Merkmalen des Anspruchs 12, einer Verwendung mit den Merkmalen des Anspruchs 13, einem Verfahren mit den Merkmalen des Anspruchs 14 und ein Datenagglomerat mit den Merkmalen des Anspruchs 15. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann, wobei der Schutzbereich der Erfindung durch die unabhängigen Ansprüche definiert wird.

Ein Aspekt der Erfindung betrifft eine Kabelführung zum Anschließen von Phasenleitungen an einen Rotor eines Generators einer Windkraftanlage, mit einem Hohlrohr zum axialen Einstecken in eine Rotorwelle des Rotors, einem innerhalb des Hohlrohrs vorgesehenen Teilungskörper, wobei der Teilungskörper zusammenmit dem Hohlrohr zumindest zu einem Großteil voneinander getrennte Durchlassquerschnitte begrenzt und der jeweilige Durchlassquerschnitt zur Durchführung von maximal einer der Phasenleitungen dimensioniert ist. Insbesondere ist in dem jeweiligen Durchlassquerschnitte genau eine der Phasenleitungen vorgesehen.

Die Kabelführung kann als eine gemeinsame Baueinheit in einen Hohlraum einer Rotorwelle des Rotors axial eingeschoben werden. Hierbei kann das Hohlrohr derart dimensioniert sein, dass die Kabelführung den axialen Querschnitt des Hohlraums in der Rotorwelle möglichst stark ausfüllt. Insbesondere ist zwischen dem Hohlrohr und einer den Hohlraum begrenzenden Innenseite der Rotorwelle eine Spielpassung ausgebildet. Mit Hilfe des Teilungskörpers, der vorzugsweise im Wesentlichen die gleiche axiale Erstreckung wie das Hohlrohr aufweist, kann der radiale Innenraum des Hohlrohrs in verschiedenen Teilvolumen unterteilt werden, die jeweils den zugehörigen Durchlassquerschnitt für die jeweils zugeordnete Phasenleitung aufweisen. Der Durchlassquerschnitt ist insbesondere an den Querschnitt der zugeordneten Phasenleitung angepasst, so dass die jeweilige Phasenleitung, insbesondere mit Spielpassung, in den Durchlassquerschnitt eingefädelt werden kann. Die Durchlassquerschnitte sind vorzugsweise auf einem gemeinsamen Radius in Umfangsrichtung gleichmäßig verteilt ausgebildet. Der jeweilige Durchlassquerschnitt kann zu einem Teil von dem Teilungskörper und zu einem anderen Teil von dem Hohlrohr begrenzt sein. Mit Hilfe des zwischen dem Hohlrohr und dem Teilungskörper jeweils begrenzten Durchlassquerschnitt kann die jeweilige Phasenleitung in ihrer radialen Relativlage innerhalb der Rotorwelle definiert vorgegeben werden, während die axiale Relativlage über die Einstecktiefe des Hohlrohrs und/oder des Teilungskörpers, insbesondere durch ein mittelbares oder unmittelbares Anstoßen an einem von der Rotorwelle ausgebildeten Anschlags, vorgegeben werden kann. Die Phasenleitungen in dem jeweils zugeordneten Durchlassquerschnitt können dadurch leicht ausreichend weit zueinander beabstandet positioniert sein, dass eine unerwünschte elektromagnetische Wechselwirkung zwischen den Phasenleitungen, die zu Blindströmen führen könnte, vermieden oder zumindest reduziert sein kann. Beispielsweise kann die Kabelführung mit Hilfe eines Deckelelements in axialer Richtung angepresst und/oder in Umfangsrichtung verdrehgesichert festgehalten werden, so dass sich besonders einfach die Kabelführung in dem Hohlraum der Rotorwelle montieren und vorzugsweise bewegungsfest festhalten lässt. Dies wiederum ermöglicht es, ein Einfüllen eines flüssigen und aushärtbaren Füllmaterials einzusparen.

Falls nach einem Defekt, beispielsweise einem Kabelbrand, eine Phasenleitung ausgetauscht werden soll, kann die Kabelführung demontiert und die defekte Phasenleitung, vorzugsweise sämtliche Phasenleitungen, durch jeweils eine funktionsfähige Phasenleitung ersetzt werden, ohne dass hierzu zunächst das ausgehärtete Füllmaterial aus dem Hohlraum der Rotorwelle entfernt werden muss. Ebenso wenig ist es erforderlich ein aushärtbares Füllmaterial nach dem Austausch der Phasenleitung in den Hohlraum einfüllen zu müssen und hierzu den Rotor zusammen mit der Rotorwelle auszubauen und in eine vertikale Ausrichtung zu bringen. Stattdessen kann die Kabelführung mit der/den ausgetauschten Phasenleitung(en) noch vor Ort innerhalb der Gondel der Windkraftanlage wieder in die Rotorwelle eingesteckt werden. Für die Reparatur der defekten Phasenleitung erforderliche Stillstandzeiten der Windkraftanlage können dadurch deutlich verkürzt und insbesondere minimiert werden. Zudem ist ein einfaches und schnelles Retrofitting von Rotorwellen mit ausgehärtetem Füllmaterial durch die Kabelführung ermöglicht, indem der Hohlraum der Rotorwelle bei im Wesentlichen horizontaler Ausrichtung der Rotorwelle gereinigt und das Füllmaterial entfernt wird, so dass nachfolgend die Kabelführung ohne zwischenzeitlichen Ausbau des Rotors und der Rotorwelle axial in den Hohlraum der Rotorwelle eingesteckt werden kann. Durch die definiert vorgegebene Positionierung der Phasenleitungen in dem jeweils zugehörigen Durchlassquerschnitt kann auch ohne ausgehärtetes Füllmaterial die Relativlage der Phasenleitungen in der Rotorwelle des Rotors leicht montierbar und demontierbar vorgegeben werden, so dass ein reparaturfreundlicher elektrisch anschließbarer Rotor ermöglicht ist.

Die Kabelführung kann eine im Wesentlichen zylindrische Form aufweisen, an deren Axialseiten die Phasenleitungen aus dem jeweils zugehörigen Durchlassquerschnitt herausragen können. An der zu den Wicklungen des Rotors weisenden Axialseite der Kabelführung kann die jeweilige Phasenleitung über eine angeschrägte Rampe und/oder Öffnung nach radial außerhalb der Rotorwelle geführt und an der zugehörigen Wicklung angeschlossen werden. Die Kabelführung kann ohne die Phasenleitungen eine Baueinheit ausbilden, die in den Hohlraum der Rotorwelle verbaut wird, bevor nachfolgend die jeweiligen Phasenleitungen montiert und durch die Kabelführung hindurchgeführt werden, wobei insbesondere die Phasenleitungen mit einer Spielpassung in der Kabelführung eingesetzt sind. Alternativ können die Phasenleitungen als Teil der Kabelführung zusammen mit der übrigen Kabelführung eine gemeinsame Baueinheit ausbilden, die als Ganzes in den Hohlraum der Rotorwelle verbaut wird, wobei insbesondere die Phasenleitungen mit einer Presspassung in der Kabelführung eingesetzt sind.

Das Hohlrohr der Kabelführung kann in axialer Richtung beispielsweise an einem Anschlag der Rotorwelle und/oder einer anderen zuvor eingesteckten Kabelführung anschlagen, um in einer definierten Einstecktiefe in dem Hohlraum der Rotorwelle positioniert zu sein. Vorzugsweise ist das Hohlrohr über eine in einer Nut verlaufenden Nase verdrehgesichert in dem Hohlraum der Rotorwelle aufgenommen. Das Hohlrohr ist insbesondere aus einem elektrisch isolierenden Kunststoffmaterial hergestellt, das vorzugsweise hochtemperaturfest ist, wie beispielsweise PTFE, PEEK, PEK, PVDF oder PFA. Besonders bevorzugt kann das Hohlrohr als elektrischer Isolator zwischen den Phasenleitungen und der insbesondere metallischen Rotorwelle wirken, so dass Spannungsdurchschläge sicher vermieden werden können. Gegebenenfalls kann das Hohlrohr über einen Masse-Anschluss geerdet sein. Zudem ist es möglich, dass das Hohlrohr eine elektromagnetische Abschirmung für die Phasenleitungen bereitstellt, wodurch Kriechströme in der Rotorwelle vermieden werden können.

Der Teilungskörper kann separat zu dem Hohlrohr ausgeführt sein. Beispielsweise ist der Teilungskörper in das Hohlrohr eingeschoben und/oder mit dem Hohlrohr drehfest befestigt, wobei die Befestigung reibschlüssig, beispielsweise durch Klemmen, und/oder formschlüssig, beispielsweise durch Verklipsen und/oder Verschrauben, erfolgen kann. Der Teilungskörper kann den von dem Hohlrohr ganz oder teilweise begrenzen Querschnitt in die Durchlassquerschnitte unterteilen. Bei einer gegebenen Anzahl von Phasenleitungen, einem gegebenen Querschnitt der Phasenleitungen und einem gegebenen Innendurchmesser des Hohlrohrs kann sich eine geeignete Formgestaltung des Teilungskörpers ergeben, bei dem die Phasenleitungen möglichst weit radial außen und in Umfangsrichtung möglichst stark zueinander beabstandet positioniert sein können. Der Teilungskörper ist insbesondere aus einem elektrisch isolierenden Kunststoffmaterial hergestellt, das vorzugsweise hochtemperaturfest ist, wie beispielsweise PTFE, PEEK, PEK, PVDF oder PFA. Besonders bevorzugt kann der Teilungskörper als elektrischer Isolator zwischen den in Umfangsrichtung benachbarten Phasenleitungen wirken, so dass Spannungsdurchschläge und wechselseitig induzierte Blind- und/oder Kriechströme sicher vermieden werden können. Gegebenenfalls kann der Teilungskörper über einen Masse-Anschluss geerdet sein. Zudem ist es möglich, dass der Teilungskörper eine elektromagnetische Abschirmung für die Phasenleitungen bereitstellt.

Der Durchlassquerschnitt ist insbesondere derart dimensioniert, dass nur maximal eine Phasenleitung hindurchgeführt werden kann. Eine besonders nahe Positionierung von zwei Phasenleitungen aneinander, die zu einer gegenseitigen Störung durch Induktionseffekte führen könnte, ist dadurch vermieden. Vorzugsweise ist der Durchlassquerschnitt in axialer Richtung konstant oder verläuft in axialer Richtung konisch. Durch den konischen Verlauf ist es möglich die zugehörige Phasenleitung mit Spielpassung in den Durchlassquerschnitt einzufädeln und durch die Verengung des Durchlassquerschnitts die Positionierung innerhalb der Kabelführung stärker vorzugeben und/oder schließlich einen Reibschluss der Phasenleitung innerhalb der Kabelführung herbeizuführen.

Die jeweilige Phasenleitung ist zur Übertragung eines elektrischen Stroms und einer elektrischen Leistung ausgelegt, mit der die jeweilige an die Phasenleitung angeschlossene Wicklung des Rotors beaufschlagt werden soll. Die Phasenleitung kann einen elektrisch leitfähigen Kern aufweisen, der insbesondere aus Kupfer hergestellt ist, wobei der Kern in einer elektrisch isolierenden Ummantelung, insbesondere eine Kunststoffummantelung, ein Schrumpfschlauch und/oder eine Beschichtung, aufgenommen ist. Die jeweilige Phasenleitung kann über eine geeignete Verbindungstechnik an der zugeordneten Wicklung angeschlossen sein, wobei insbesondere an den beiden Enden der betrachteten Wicklung zwei verschiedenen Phasenleitungen angeschlossen sind. Insbesondere sind in dem Rotor drei Wicklungen und in der Kabelführung sechs Phasenleitung oder ein ganzzahliges Vielfaches davon vorgesehen. An einem von den Wicklungen wegweisenden Ende ist es möglich, dass die Phasenleitung über einen Schleifring elektrisch angeschlossen ist. Wenn bei der Reparatur eines Defekts festgestellt wird, dass in einer der Phasenleitungen eine thermische Überbelastung aufgetreten sein sollte, ist es bevorzugt sämtliche Phasenleitungen auszutauschen, da auch die anderen Phasenleitungen bereits thermisch beeinträchtigt sein können und ein elektrischer Überschlag auftreten könnte.

Der Rotor, der über die Kabelführung elektrisch angeschlossenen sein kann, kann Teil einer Drehstrommaschine, vorzugsweise einer doppelt gespeisten Asynchronmaschine, sein. Der Rotor weist hierzu eine geeignete Anzahl an Wicklungen auf, mit denen die Phasenleitungen der Kabelführung elektrisch verbunden sind. Die Wicklungen können über einen Rotorträger mit der, separat oder einstückig ausgeführten Rotorwelle verbunden sein.

Die Rotorwelle kann insbesondere einen zylindrischen Hohlraum aufweisen, in den die Kabelführung axial eingesteckt werden kann. Hierbei ist es möglich, dass sich der Hohlraum nur über einen Teil der axialen Erstreckung der Rotorwelle erstreckt. Vorzugsweise weist die Rotorwelle angeschrägte Rampen oder Öffnungen auf, die mit dem Hohlraum kommunizieren und über die die jeweilige Phasenleitung nach radial außen durch die Rotorwelle hindurchgeführt werden kann, um die Phasenleitung mit der zugehörigen Wicklung des Rotors zu befestigen. In einem gemeinsamen Axialbereich mit dem Hohlraum kann die Rotorwelle an einer radial äußeren Mantelfläche außerhalb des Hohlraums gelagert werden, insbesondere um auch bei hohen Drehzahlen einen möglichst konstanten radialen Abstand und/oder Luftspalt zwischen dem Rotor und dem Stator beizubehalten.

Der Generator kann einen mit dem Rotor elektromagnetisch zusammenwirkenden Stator aufweisen, in den elektrischer Strom induziert werden kann, der als elektrische Energie einer Batterie oder einem Stromnetz zugeführt werden kann. Der Generator ist insbesondere als doppelt gespeiste Asynchronmaschine ausgebildet. Der Generator ist vorzugsweise als Windkraftanlagengenerator ausgestaltet und zur industriellen Energieerzeugung aus Windkraft in einer Windkraftanlage dimensioniert.

Industrielle Windkraftanlagen sind vornehmlich zur Energieerzeugung aus Windkraft ausgestaltet, wobei aus der Windkraft gewonnene elektrische Energie insbesondere in ein öffentliches Stromnetz eingeleitet werden kann, um Energieverbraucher mit regenerativ erzeugter Energie versorgen zu können. Ein für eine industrielle Windkraftanlage ausgestaltetes Windkraftgetriebe ist insbesondere für eine Leistung über 1,0 MW, vorzugsweise über 5,0 MW und besonders bevorzugt über 7,5 MW ausgelegt und entsprechend robust und großvolumig ausgestaltet. Vorzugsweise ist ein Antriebsstrang der Windkraftanlage und somit auch eine Mittellinie des Generators, die mit einer Drehachse des Rotors des Generators zusammenfällt, zur Horizontalen leicht, beispielsweise um 5° bis 12°, angeschrägt.

Unter einer "im Wesentlichen horizontalen Ausrichtung" wird daher nicht nur eine exakt horizontale Ausrichtung senkrecht zur Vertikalen, sondern auch eine entsprechend der leichten Anschrägung in der Windkraftanlagen erfolgten Ausrichtung des Generators. Eine axiale Richtung und eine radiale Richtung beziehen sich auf die gegebenenfalls leicht angeschrägte Mittellinie und Drehachse des Generators beziehungsweise des Rotors.

Insbesondere ist das Hohlrohr aus mindestens zwei separaten Schalenteilen zusammengesetzt, wobei die Schalenteile miteinander und/oder mit dem Teilungskörper befestigt sind. Das Hohlrohr kann dadurch in die Schalenteile zerlegt und wieder zusammengefügt werden. Dadurch ist es möglich, die jeweiligen Phasenleitungen von radial außen her in einen den jeweiligen Durchlassquerschnitt begrenzenden Zwischenraum des Teilungskörpers einzusetzen und nachfolgend durch das Ansetzen des zugeordneten Schalenteils die Phasenleitung in radialer Richtung verliersicher zurückzuhalten. Vorzugsweise kann die jeweilige Phasenleitung zwischen dem Teilungskörper und dem Schalenteil verpresst und dadurch reibschlüssig fixiert werden, ohne dass hierzu ein aushärtbares Füllmaterial eingegossen werden müsste. Die Schalenteile können mit dem Teilungskörper und/oder miteinander befestigt sein, um im vollständig montierten Zustand das Hohlrohr auszubilden. Die Anzahl der Phasenleitungen kann der Anzahl der Schalenteile oder ein ganzzahliges Vielfaches entsprechen. Vorzugsweise kann ein einzelnes Schalenteil zwei oder drei Phasenleitungen gleichzeitig abdecken und insbesondere anpressen.

Vorzugsweise sind die Schalenteile mit Hilfe eines Verbindungsmittels nach radial innen an dem Teilungskörper angepresst. Das Verbindungsmittel kann eine nach radial innen gerichtete Anpresskraft auf das mindestens eine Schalenteil ausüben, wodurch die radiale Erstreckung der Kabelführung auf das erforderliche Minimum reduziert werden kann. Insbesondere kann mit Hilfe der von dem Verbindungsmittel aufgebrachten Anpresskraft die mindestens eine Phasenleitung reibschlüssig verpresst werden. In diesem Fall ist es möglich, dass zwischen dem Schalenteil und dem Teilungskörper ein Trennspalt verbleibt. Vorzugsweis liegt das Schalenteile ohne Trennspalt an dem Teilungskörper an, so dass eine zu starke mechanische Belastung und/oder Verformung der Phasenleitung, die möglicherweise zu einer Beschädigung der Phasenleitung führen könnte, vermieden wird.

Besonders bevorzugt weisen die Schalenteile eine nach radial außen geöffnete Aufnahmenut zur Aufnahme des Verbindungsmittels auf, wobei insbesondere das Verbindungsmittel in radialer Richtung in der Aufnahmenut vollständig versenkt aufgenommen ist. Das Verbindungsmittel kann dadurch mit einer Anlagefläche eine Anpresskraft auf das Schalenteil ausüben, wobei durch die zumindest teilweise versenke Aufnahme des Verbindungsmittels in der Aufnahmenut ein radialer Bauraumbedarf der Kabelführung nicht vergrößert ist. Die Aufnahmenut kann beispielsweise nur in einem Teilbereich in Umfangsrichtung vorgesehen sein, wobei vorzugsweise die Aufnahmenut in Umfangsrichtung um mindestens 360° vollständig umlaufend ausgestaltet ist. In einem Umfangswinkelbereich, der zwischen den Mittelpunkten zweier in Umfangsrichtung nachfolgenden Phasenleitungen liegt, kann die Aufnahmenut eine größere radiale Tiefe als in radialer Verlängerung der Mittelpunkte der Phasenleitungen aufweisen, da dort entsprechend viel Material des Teilungskörpers und/oder des Schalenteils zurückgenommen werden kann, ohne die Phasenleitungen zu beeinträchtigen.

Insbesondere ist das Verbindmittel bandförmig, insbesondere als Kabelbinder, Verschnürung und/oder Verdrahtung, ausgebildet. Das bandförmige Verbindmittel kann an seinen Enden miteinander verbunden sein und dadurch über den gesamten Umfang eine nach radial innen gerichtete Anpresskraft ausüben. Nicht für die Verbindung der Enden des bandförmigen Verbindungsmittels benötigte Endbereiche können abgeschnitten werden. Ein Knoten des bandförmigen Verbindungsmittels und oder eine Rastverbindung des als Kabelbinder ausgebildeten Verbindungsmittels kann in einem tiefer ausgebildeten Bereich der Aufnahmenut versenkt sein, während für den übrigen Bereich des bandförmigen Verbindungsmittels eine geringere Tiefe der Aufnahmenut ausreichend ist.

Vorzugsweise liegen die Schalenteile in Umfangsrichtung an dem Teilungskörper an. Dies bedeutet, dass in Umfangsrichtung nachfolgende Schalenteile nicht unmittelbar, sondern nur mittelbar über einen dazwischen ausgebildeten Teil des Teilungskörpers miteinander verbunden sind. Das Hohlrohr wird dadurch nur abschnittsweise durch die Schalenteile zusammengesetzt, wobei ein geringerer Teil der nach radial außen weisenden Außenmantelfläche des Hohlrohrs von dem Teilungskörper ausgebildet wird. Die radiale Relativlage des Schalenteils kann dadurch leichter durch ein Anstoßen an der in dem Durchlassquerschnitt vorgesehenen Phasenleitung bestimmt sein und nicht durch ein tangentiales Anschlagen an dem in Umfangsrichtung nachfolgenden Schalenteil. Zudem kann das Schalenteil über ein mit einem Anteil in radialer Richtung verlaufenden Befestigungsmittel unter Verpressen der zugeordneten Phasenleitung leicht mit dem Teilungskörper befestigt werden.

Besonders bevorzugt weist der Teilungskörper einen, insbesondere ringförmigen, Zentralbereich und von dem Zentralbereich nach radial außen abstehende Trennstege auf. Der Zentralbereich kann derart dimensioniert sein, dass die in den jeweiligen Durchlassquerschnitten vorgesehenen Phasenleitungen möglichst weit nach radial außen gedrückt werden können. Wenn der Zentralbereich massiv ausgeführt ist, kann der Zentralbereich besonders hohe Anpresskräfte abstützen. Wenn der Zentralbereich hohl, insbesondere (kreis-)ringförmig ausgestaltet ist, kann der Materialeinsatz für den Teilungskörper auf das zur Abstützung der zu erwartenden Kräfte erforderliche Ausmaß kostengünstig beschränkt werden. Die Trennstege können eine in tangentialer Richtung geeignete Dicke aufweisen, um die Phasenleitungen in Umfangsrichtung möglichst stark zueinander zu beabstanden. Insbesondere kann die Materialdicke der Trennstege so groß sein, dass ein zur Befestigung des Schalenteils mit dem Trennsteg vorgesehenes Befestigungsmittel mit dem Trennsteg zusammenwirken kann, beispielsweise eingeschraubt werden kann.

Insbesondere ist die Phasenleitung in dem zugehörigen Durchlassquerschnitt fixiert, insbesondere eingeschäumt. Die Fixierung kann reibschlüssig durch ein Verpressen der Phasenleitung zwischen dem Hohlrohr und dem Teilungskörper erfolgen. Es ist aber auch möglich eine formschlüssige Befestigung, beispielsweise durch ein Ausschäumen eines im Durchlassquerschnitte verbleibenden Leerraums an der Phasenleitung. Bei einem Defekt einer der Phasenleitungen braucht für den Austausch der betroffenen Phasenleitung nur der Durchlassquerschnitt der betroffenen Phasenleitung geräumt werden, aber nicht der gesamte Querschnitt des Hohlraums der Rotorwelle und auch nicht sämtliche voneinander getrennten Durchlassquerschnitte.

Vorzugsweise weist die jeweilige Phasenleitung an mindestens einem Ende einen, insbesondere durch Crimpen, angepressten Kontaktanschluss aufweist. Dadurch kann eine kostengünstige Befestigungstechnik für die Phasenleitung mit der Wicklung und/oder einem Schleifring realisiert werden. Falls durch das Crimpen eine Beschädigung der Phasenleitung aufgetreten sein sollte, kann diese nach einem entsprechenden Testen der Phasenleitung und/oder einem aufgetretenen Defekt, beispielsweise Kabelbrand, leicht ausgetauscht werden.

Ein weiterer Aspekt betrifft einen Rotor für einen Generator einer Windkraftanlage, mit einem mindestens eine Wicklung aufweisenden Rotorkörper, einer mit dem Rotorkörper verbundenen Rotorwelle, wobei die Rotorwelle einen zu einer Axialseite hin geöffneten Hohlraum aufweist, und einer in den Hohlraum der Rotorwelle axial eingesteckten Kabelführung, die wie vorstehend beschrieben aus- und weitergebildet sein kann, wobei die Phasenleitungen durch die Rotorwelle nach radial außen geführt und mit der jeweiligen Wicklung kontaktiert sind. Der Rotor kann insbesondere wie vorstehend beschrieben aus- und weitergebildet sein. Durch die definiert vorgegebene Positionierung der Phasenleitungen in dem jeweils zugehörigen Durchlassquerschnitt kann auch ohne ausgehärtetes Füllmaterial die Relativlage der Phasenleitungen in der Rotorwelle des Rotors leicht montierbar und demontierbar vorgegeben werden, so dass ein reparaturfreundlicher elektrisch anschließbarer Rotor ermöglicht ist.

Besonders bevorzugt sind mindestens zwei in axialer Richtung hintereinander in dem Hohlraum der Rotorwelle angeordnete separat axial einführbare Kabelführungen vorgesehen, wobei die Kabelführungen sich dieselben Phasenleitungen teilen. Dadurch ist es möglich, bei einer in axialer Richtung besonders lang ausgestalteten Rotorwelle mit einem entsprechend langen Hohlraum die Kabelführung jeweils stückchenweise in den Hohlraum einzustecken. Eine einzige besonders lange Kabelführung kann dadurch vermieden werden, wodurch die Handhabung vereinfacht ist. Beispielsweise können zuerst das Hohlrohr und der zugehörige Teilungskörper als eine vormontierte Baueinheit verbaut werden, bevor die Phasenleitungen durch diese in axialer Richtung hintereinander angeordnete Baueinheiten hindurchgeführt werden. Es ist aber auch möglich zunächst die gesamte Kabelführung in die Rotorwelle einzustecken und die aus der bereits eingesteckten Kabelführung herausragenden Phasenleitungen mit dem Hohlrohr und dem Teilungskörper der nächsten Kabelführung zu verbinden, die danach ebenfalls in die Rotorwelle eingesteckt wird und immer so weiter.

Ein weiterer Aspekt betrifft einen Generator, insbesondere doppelt gespeiste Asynchronmaschine, für eine Windkraftanlage, mit einem Stator, einem mit dem Stator zusammenwirkenden Rotor, der wie vorstehend beschrieben aus- und weitergebildet sein kann, und einer, insbesondere als Schleifringanordnung ausgestalten, Kontaktierungseinheit zur elektrischen Kontaktierung der von dem Rotorkörper wegweisenden Enden der Phasenleitungen. Der Generator kann insbesondere wie vorstehend beschrieben aus- und weitergebildet sein. Durch die definiert vorgegebene Positionierung der Phasenleitungen in dem jeweils zugehörigen Durchlassquerschnitt kann auch ohne ausgehärtetes Füllmaterial die Relativlage der Phasenleitungen in der Rotorwelle des Rotors leicht montierbar und demontierbar vorgegeben werden, so dass ein reparaturfreundlicher elektrisch anschließbarer Rotor eines Generators ermöglicht ist.

Ein weiterer Aspekt betrifft eine Verwendung einer Kabelführung, die wie vorstehend beschrieben aus- und weitergebildet sein kann, zur Reparatur von durch Kabelbrand beschädigten Phasenleitungen eines Rotors eines Generators für eine Windkraftanlage. Die Verwendung kann insbesondere wie vorstehend beschrieben aus- und weitergebildet sein. Der Austausch einer durch einen Kabelbrand beschädigten Phasenleitung kann dadurch schnell und einfach erfolgen. Durch die definiert vorgegebene Positionierung der Phasenleitungen in dem jeweils zugehörigen Durchlassquerschnitt kann auch ohne ausgehärtetes Füllmaterial die Relativlage der Phasenleitungen in der Rotorwelle des Rotors leicht montierbar und demontierbar vorgegeben werden, so dass eine Verwendung der Kabelführung für die Reparatur eines reparaturfreundlichen elektrisch anschließbaren Rotors ermöglicht ist.

Ein weiterer Aspekt betrifft ein Verfahren zur Reparatur, insbesondere von durch Kabelbrand beschädigten, Phasenleitungen eines Rotors eines Generators für eine Windkraftanlage, bei dem die beschädigte Phasenleitung von dem übrigen Rotor getrennt wird, die beschädigte Phasenleitung aus einer Rotorwelle des Rotors entfernt wird, während die Rotorwelle in einer im Wesentlichen horizontalen Ausrichtung verbleibt und nachfolgend eine Kabelführung, die wie vorstehend beschrieben aus- und weitergebildet sein kann, in axialer Richtung in die Rotorwelle eingesteckt wird, während Rotorwelle in einer im Wesentlichen horizontalen Ausrichtung verbleibt, insbesondere um den Rotor, der wie vorstehend beschrieben aus- und weitergebildet sein kann, zu erhalten. Das Verfahren kann insbesondere wie vorstehend beschrieben aus- und weitergebildet sein. Insbesondere kann vorgesehen sein, dass der Hohlraum der Rotorwelle ganz oder teilweise von Rückständen befreit und/oder gereinigt wird, die insbesondere durch ein ausgehärtetes Füllmaterial verursacht sind. Die Reinigung des Hohlraums kann mechanisch, insbesondere spanabhebend, und/oder chemisch, insbesondere mit Hilfe eines Lösungsmittels, erreicht werden. Durch die definiert vorgegebene Positionierung der Phasenleitungen in dem jeweils zugehörigen Durchlassquerschnitt kann auch ohne ausgehärtetes Füllmaterial die Relativlage der Phasenleitungen in der Rotorwelle des Rotors leicht montierbar und demontierbar vorgegeben werden, so dass ein reparaturfreundliches Reparaturverfahren für einen elektrisch anschließbarer Rotor ermöglicht ist.

Ein Aspekt betrifft ferner ein Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in der Kabelführung, die wie vorstehend beschrieben aus- und weitergebildet sein kann, vorgesehenen Bestandteile, wobei die Datenpakete dazu hergerichtet sind bei einer Verarbeitung durch eine Datenverarbeitungseinrichtung zum Betrieb einer Werkzeugmaschine zur additiven Fertigung von Vorrichtungen eine additive Herstellung der Bestandteile Kabelführung, insbesondere durch 3D-Druck, und/oder bei einer Verarbeitung durch eine Datenverarbeitungseinrichtung zur Durchführung einer technischen Simulation eine Simulation der Funktionsweise der Kabelführung, durchzuführen und hierbei erzeugte Simulationsergebnisse für eine weitere Verwendung auszugeben, insbesondere zu dem Zweck einen Dauerfestigkeitsnachweis in Abhängigkeit veränderlicher Lasten und/oder veränderlicher Temperaturbelastungen zu erbringen und gegebenenfalls mit an einer real produzierten erfindungsgemäßen Vorrichtung und/oder an einem Prototyp der erfindungsgemäßen Vorrichtung ermittelten Messdaten zu vergleichen. Die Datenpakete des Datenagglomerat sind an die erfindungsgemäße Ausgestaltung der jeweiligen vorstehend beschriebenen erfindungsgemäßen Vorrichtung speziell angepasst, um die erfindungsgemäße Wechselwirkung der Bestandteile der erfindungsgemäßen Vorrichtung bei der Verarbeitung in der Datenverarbeitungseinrichtung adäquat abbilden zu können. Die Datenpakete können insbesondere räumlich verteilt gespeichert sein, aber derart aneinander angepasst sein, dass in dem Fall, dass alle Datenpakete in einer gemeinsamen Datenverarbeitungseinrichtung zusammengeführt sind, das so zusammengesetzte Datenagglomerat alle erforderlichen Daten für eine additive Fertigung und/oder eine technische Simulation mit Hilfe der Datenverarbeitungseinrichtung für die erfindungsgemäße Vorrichtung bereitstellt. Beispielsweise sind die Datenpakete jeweils separate Teile einer Datenbibliothek ("Library"), die zur Ausbildung des Datenagglomerats zusammengeführt und bezüglich ihrer relativen Abmessungen zueinander und/oder absoluten Abmessungen und/oder Werkstoffeigenschaften korrespondierend zu der jeweiligen erfindungsgemäßen Vorrichtung aneinander angepasst sind. Das Datenagglomerat kann in der Art eines sogenannten "digital twin" eine virtuelle Verkörperung der jeweiligen erfindungsgemäßen Vorrichtung darstellen, die eine virtuelle Untersuchung in Form einer Simulation oder eine reale Vergegenständlichung mit Hilfe eines additiven Fertigungsverfahrens ermöglicht. Ein derartiger digitaler Zwilling ist beispielsweise in US 2017/286572 A1 dargestellt, auf dessen Offenbarungsgehalt als Teil der Erfindung hiermit Bezug genommen wird.

Wenn die Datenverarbeitungseinrichtung der Werkzeugmaschine das Datenagglomerat verarbeitet, wird die erfindungsgemäße Vorrichtung hergestellt, so dass nach der Verarbeitung des Datenagglomerats in der Datenverarbeitungseinrichtung die erfindungsgemäße Vorrichtung, zumindest in Form eines Prototyps, erhalten wird. Insbesondere kann jeweils ein Datenpaket einen separat ausgeführten Bestandteil der jeweiligen zugeordneten erfindungsgemäßen Vorrichtung abbilden, so dass die einzelnen Bestandteile in ihrer Relativlage und/oder Relativbeweglichkeit leicht tatsächlich und/oder virtuell zusammengesetzt werden können, um die erfindungswesentlichen Wechselwirkungen zu realisieren. Insbesondere ist es möglich mit Hilfe der jeweiligen Datenpakete die verschiedenen Bestandteile der jeweiligen Vorrichtung separat und gegebenenfalls aus unterschiedlichen Materialen durch additive Fertigung zu erzeugen und nachfolgend zu einem Prototyp der jeweiligen Vorrichtung zusammenzusetzen. Die Aufteilung der Daten des Datenagglomerats auf verschiedene Datenpakete ermöglicht dadurch in einfacher Weise eine sequentielle additive Fertigung von relativ zueinander bewegbaren Bestandteilen der jeweiligen Vorrichtung in Form eines Bausatzes ("Kit of parts"), der dazu hergerichtet ist für die erfindungsgemäße Wechselwirkung der Bestandteile des Prototyps für die Lösung des der Erfindung zu Grunde liegenden Problems nur noch sinnfällig zusammengesetzt zu werden.

Zusätzlich oder alternativ ist es möglich mit Hilfe der Datenpakete des Datenagglomerats in einer virtuellen Umgebung während einer technischen Simulation die einzelnen Bestandteile der jeweiligen Vorrichtung, ihre Wechselwirkungen, den physikalische Zustand und/oder die Veränderung physikalischer Parameter in Abhängigkeit verschiedener Randbedingungen und/oder über die Zeit der zugehörigen erfindungsgemäßen Vorrichtung zu berechnen und/oder vorherzusagen sowie für die Überprüfung, ob die erfindungsgemäße Vorrichtung auf Basis der angenommenen Ausgestaltung und unter Berücksichtigung der angenommen simulierten Einflüsse für den beabsichtigten Einsatzzweck gut genug geeignet ist, weiterzuverwenden. Wenn das Datenagglomerat von einer die Simulationsumgebung abbildenden Datenverarbeitungseinrichtung verarbeitet wird, ist es möglich das Verhalten der erfindungsgemäßen Vorrichtung unter Berücksichtigung von, sich insbesondere verändernden, Randbedingungen untersuchen zu können. Dadurch ist es beispielsweise möglich Fliehkrafteffekte bei einzelnen Bestandteilen der erfindungsgemäßen Vorrichtung in Abhängigkeit von verschiedenen statischen und/oder dynamischen Lasten und/oder unterschiedlichen Betriebstemperaturen zu untersuchen, wobei derartige Simulationsergebnisse in die Erstellung eines Dauerfestigkeitsnachweis einfließen können. Vorzugsweise werden die nach der Verarbeitung des Datenagglomerats in der Datenverarbeitungseinrichtung für die Simulationsumgebung erhaltenen Simulationsergebnisse gespeichert, um diese mit an einer real produzierten erfindungsgemäßen Vorrichtung und/oder an einem Prototyp der erfindungsgemäßen Vorrichtung ermittelten Messdaten zu vergleichen. Dadurch ist es möglich die Güte der mit Hilfe des Datenagglomerats erhaltenen Simulationsergebnisse zu beurteilen und/oder, insbesondere bei besonders starken Abweichungen, Messfehler und/oder eine fehlerhafte Messung zu identifizieren. Eine zerstörungsfreie Qualitätskontrolle der erfindungsgemäßen Vorrichtung ist dadurch vereinfacht und verbessert.

Durch das Datenagglomerat ist eine kostengünstige Herstellung von Prototypen und/oder computerbasierten Simulationen ermöglicht, um die Funktionsweise der betrachteten Vorrichtung zu studieren, Probleme im konkreten Anwendungsfall zu identifizieren und Verbesserungen zu finden. Die Lösung der der Erfindung zugrunde liegenden Aufgabe kann mit Hilfe des Datenagglomerats leicht und kostengünstig überprüft werden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Wenn ein dem konkreten Ausführungsbeispiel ein Merkmal in Kombination mit einem anderen Merkmal dargestellt wird, dient dies nur der vereinfachten Darstellung der Erfindung anhand des Ausführungsbeispiels und soll keinesfalls bedeuten, dass dieses Merkmal nicht auch ohne das andere Merkmal eine Weiterbildung der Erfindung sein kann, wobei der Schutzbereich der Erfindung durch die unabhängigen Ansprüche definiert wird. Es zeigen:
Fig. 1: eine schematische perspektivische Ansicht einer Windkraftanlage,
Fig. 2: eine schematische perspektivische teilgeschnittene Ansicht einer Rotorwelle der Windkraftanlage aus Fig. 1 mit einer verbauten erfindungsgemäßen Kabelführung,
Fig. 3: eine schematische perspektivische teilgeschnittene Ansicht einer Rotorwelle der Windkraftanlage aus Fig. 1 mit zwei verbauten erfindungsgemäßen Kabelführungen,
Fig. 4: eine schematische Schnittansicht einer Ausführungsform einer erfindungsgemäßen Kabelführung und
Fig. 5: eine schematische perspektivische Ansicht der Kabelführung aus Fig. 4.

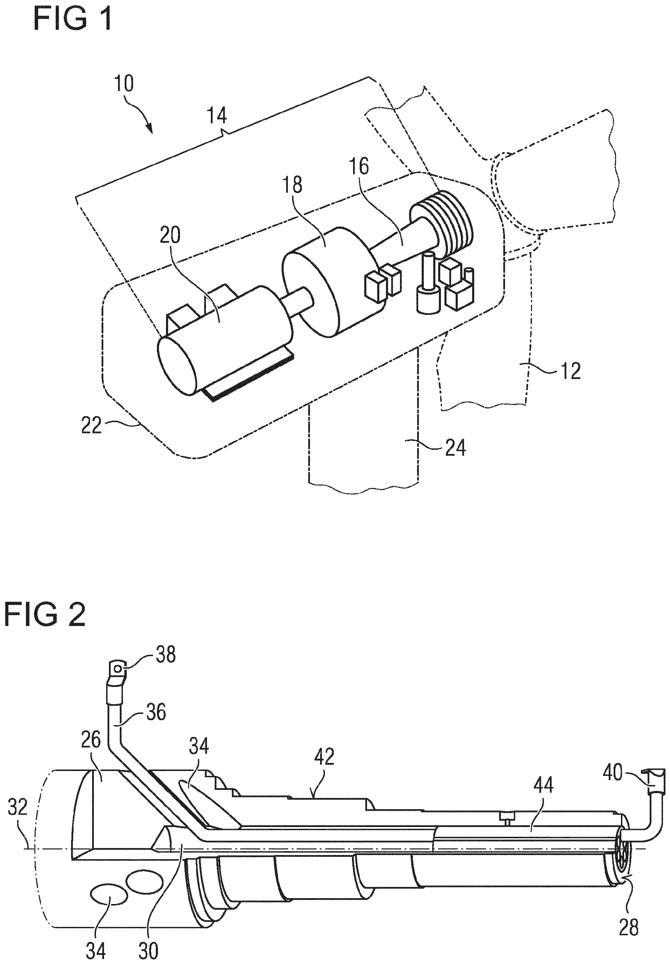

Die in Fig. 1 dargestellte industrielle Windkraftanlage 10 kann zur Erzeugung von elektrischer Energie aus Windkraft verwendet werden. Hierzu weist die Windkraftanlage 10 einen Windrotor 12 auf, der durch Wind windkraftbetrieben in Drehung versetzt werden kann. Der Windrotor 12 ist an einen Antriebsstrang 14 angekoppelt. Vorzugsweise ist der Antriebsstrang 14 zu einer Horizontalen um 5° bis 12° angeschrägt ausgerichtet. Der Windrotor 12 ist mit einer Windrotorwelle 16 verbunden, die innerhalb des Antriebsstrangs 14 insbesondere mit einem Getriebe 18 gekoppelt sein kann, um das über den Windrotor 12 und die Windrotorwelle 16 eingeleitete Drehmoment zu wandeln. Das in dem Getriebe 18 gewandelte Drehmoment wird einer im Generatormodus betriebenen elektrischen Maschine 20 zugeführt, die vorzugsweise als doppelt gespeiste Asynchronmaschine ausgestaltet ist. Alternativ kann die Windrotorwelle 16 des Windrotors 12 ohne zwischengeschaltetes Getriebe 18 direkt, das heißt ohne Drehzahlwandlung, mit der elektrischen Maschine 20 gekoppelt sein. Die von der elektrischen Maschine 20 erzeugte elektrische Energie kann einer wiederaufladbaren Batterie und/oder einem Stromnetz zugeführt werden. Der Antriebsstrang 14 ist im dargestellten Ausführungsbeispiel vollständig in einer Gondel 22 untergebracht, die an einem oberen freien Ende eines Standturms 24 angebracht ist.

Die elektrische Maschine 20 weist einen feststehenden Stator und einen relativ zu dem Stator drehenden Rotor auf, der elektromagnetisch mit dem Stator wechselwirken kann. Grundsätzlich ist es möglich, dass der Rotor Permanentmagneten aufweist, die mit Elektromagneten des Stators zusammenwirken, wobei im vorliegenden Ausführungsbeispiel der Rotor verschiedene Wicklungen aufweist, die von einem elektrischen Strom durchflossen werden können. Um die Wicklungen des Rotors mit einem elektrischen Strom zu versorgen, kann der Rotor des elektrischen Maschine 20 eine in Fig. 2 dargestellte Rotorwelle 26 aufweisen, die einen an einem axialen Ende 28 geöffneten im Wesentlichen zylindrischen Hohlraum 30 aufweist. Von dem Hohlraum 30 gehen zu einer Drehachse 32 des Rotors angeschrägt verlaufende, insbesondere als Schrägbohrungen ausgestaltete, Öffnungen 34 ab. Dies ermöglicht es, Phasenleitungen 36 durch den Hohlraum 30 und die jeweils zugeordnete Öffnung 34 zu führen, um die Wicklungen über die Phasenleitungen 36 anschließen zu können. Hierzu können die Phasenleitungen 36 an ihren Enden durch Crimpen befestigte Anschlüsse 38, 40 aufweisen. Der eine Anschluss 38 kann mit der Wicklung und der andere Anschluss 40 mit einem nicht dargestellten Schleifring befestigt werden. Da die Phasenleitungen 36 im Inneren der Rotorwelle 26 durch den Hohlraum 30geführt sind, können an einer radial äußeren Mantelfläche 42 der Rotorwelle 26 Lager angreifen, um die Rotorwelle 26 und den mit der Rotorwelle 26 verbundenen Rotor zu lagern.

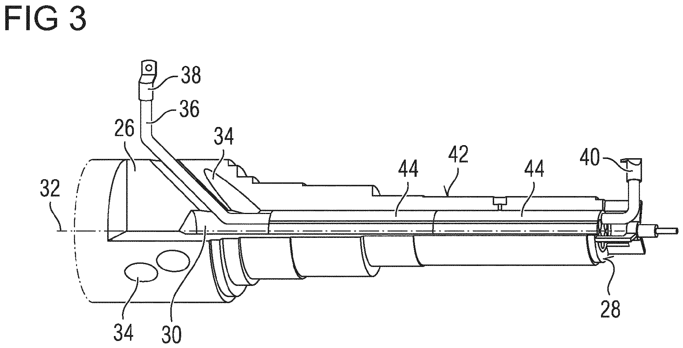

Wie in Fig. 2 zu erkennen ist, sind die Phasenleitungen 36 nicht über ein in den Hohlraum 30 der Rotorwelle 26 eingefülltes ausgehärtetes Füllmaterial innerhalb des Hohlraums 30 fixiert, sondern mit Hilfe einer axial in den Hohlraum 30 eingesteckten Kabelführung 44 definiert positioniert. Wie in Fig. 3 dargestellt ist, ist es auch möglich zwei oder mehr Kabelführungen 44 in den Hohlraum 30 der Rotorwelle 26 axial hintereinander vorzusehen, wobei sich die Mehrzahl an Kabelführung 44 dieselben Phasenleitungen 36 teilen können.

Für die Ausgestaltung der Kabelführung 44 sind verschiedene geometrische Varianten möglich. Beispielsweise weist die Kabelführung 44 ein hohlzylindrisches Hohlrohr 46 auf, in das ein Teilungskörper 48 mit Spielpassung oder alternativ mit Presspassung axial eingeschoben ist. Der Teilungskörper 48 kann einen beispielsweise ringförmigen Zentralbereich 50 aufweisen, von dem in radialer Richtung Trennstege 52 abgehen, die in Umfangsrichtung gleichmäßig verteilt sind. Jeweils zwischen zwei in Umfangsrichtung nachfolgenden Trennstegen 52 ist zwischen dem Hohlrohr 46 und dem Teilungskörper 48 ist ein Volumen mit einem, vorzugsweise konstanten oder in axialer Richtung konisch verlaufenden, Durchlassquerschnitt 54 freigelassen, durch das nur maximal eine Phasenleitung 36 hindurchgeführt werden kann.

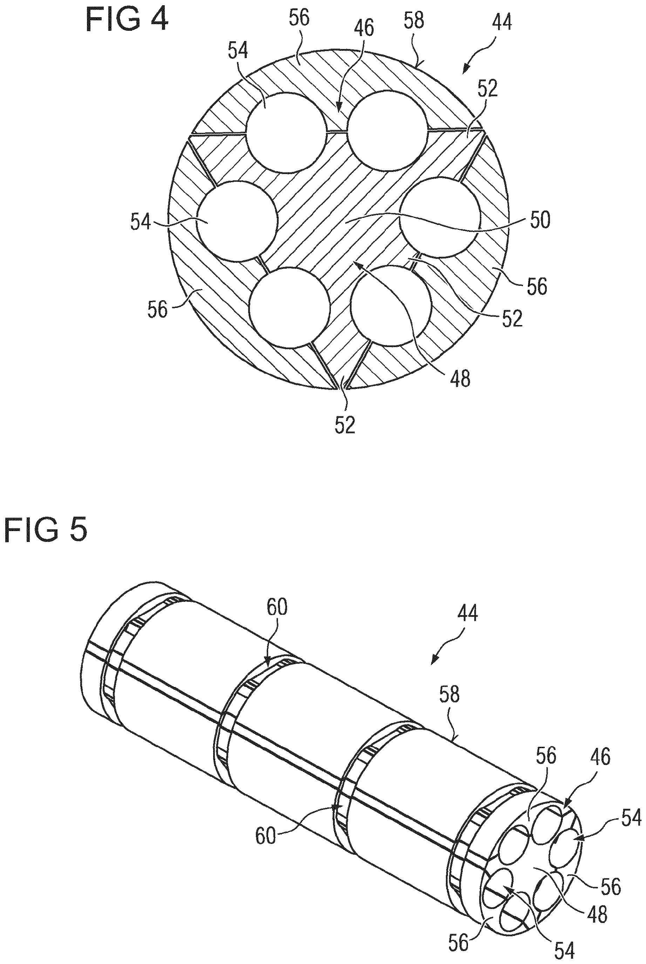

Wie in Fig. 4 dargestellt ist, kann das Hohlrohr 46 in einer besonders bevorzugten Ausführungsform jedoch durch zwei oder mehr separate Schalenteile 56 zusammengesetzt sein. Im dargestellten Ausführungsbeispiel ist insbesondere vorgesehen, dass die Schalenteile 56 in tangentialer Richtung nicht aneinander anliegen, sondern über einen bis zu einer Außenmantelfläche 58 reichenden Trennsteg 52 des Teilungskörpers 48 voneinander getrennt sind. Dies ermöglicht es die Phasenleitungen 36 von radial außen her in den jeweils zugeordneten Durchlassquerschnitt 54 einzusetzen und nachfolgend das zugehörige Schalenteil 56 mit dem Teilungskörpers 48 zu befestigen, um vorzugsweise die Phasenleitung 36 in dem Durchlassquerschnitt 54 bewegungsfest zu verpressen.

Wie in Fig. 5 dargestellt ist, kann die in Fig. 4 dargestellte Kabelführung 44 insbesondere eine an der Außenmantelfläche 58 vorgesehene Aufnahmenut 60 aufweisen, die insbesondere in Umfangsrichtung ringförmig geschlossen umlaufend ausgebildet ist. In diese Aufnahmenut 60 kann ein bandförmiges Verbindungsmittel ganz oder teilweise versenkt aufgenommen werden. Das bandförmige Verbindungsmittel kann beispielsweise als Kabelbinder, Metallband, Schnur oder Ähnliches ausgestaltet sein. Das bandförmige Verbindungsmittel kann an seinen Enden miteinander verbunden sein und dadurch eine Anpresskraft nach radial innen auf die Kabelführung 44 aufprägen, insbesondere um die Phasenleitungen 36 zwischen dem Teilungskörper 48 und den Schalenteilen 56 des Hohlrohrs 46 bewegungsfest zu verpressen. Die Aufnahmenut 60 kann vorzugsweise in Umfangsrichtung mindestens einen stärker vertieften Teilbereich aufweisen, in dem eine Verbindungstechnik zur Verbindung der Enden des bandförmige Verbindungsmittels vollständig versenkt aufgenommen werden kann. Beispielsweise kann eine Rastverbindung eines Kabelbinders in dem vertieften Teilbereich der Aufnahmenut 60 versenkt aufgenommen sein, wobei insbesondere ein aus der Rastverbindung herausragender Teil des Kabelbinders abgeschnitten ist.

Wenn eine Reparatur vorgenommen werden soll, insbesondere ein Austausch einer durch einen Kabelbrand beschädigten Phasenleitung 36, können die Phasenleitungen 36 zusammen mit der mindestens einen Kabelführung 44 aus dem Hohlraum 30 der Rotorwelle 26 entfernt werden. Nach einem Austausch, insbesondere sämtlicher, Phasenleitungen 36 kann die jeweilige Phasenleitung 36 nach einem Einsetzen der mindestens einen Kabelführung 44 oder gemeinsam mit der mindestens einen Kabelführung 44 wieder in den Hohlraum 30 der Rotorwelle 26 eingesetzt und angeschlossen werden. Hierbei ist es nicht erforderlich den Rotor der elektrischen Maschine 20 auszubauen. Stattdessen kann die Rotorwelle 26 in ihrer im Wesentlichen horizontalen Lage verbleiben.

Falls in einer Reparatursituation der Hohlraum 30 der Rotorwelle 26 mit einem ausgehärteten Füllmaterial verfüllt sein sollte, kann das nach der dem Entfernen der Phasenleitungen 36 noch in dem Hohlraum 30 verbleibende Füllmaterial mechanisch und/oder chemisch entfernt und der Hohlraum 30 gereinigt werden. Hierbei ist es nicht erforderlich den Rotor der elektrischen Maschine 20 auszubauen. Stattdessen kann die Rotorwelle 26 in ihrer im Wesentlichen horizontalen Lage verbleiben. Nach dem Entfernen des Füllmaterials und dem Austausch der defekten Phasenleitung 36 oder aller Phasenleitungen 36 können die Phasenleitungen 36 mit Hilfe der mindestens einen Kabelführung 44 wieder in dem Hohlraum 30 der Rotorwelle 26 verbaut und angeschlossen werden.

## Patentansprüche

1. Kabelführung (44) zum Anschließen von Phasenleitungen (36) an einen Rotor eines Generators (20) einer Windkraftanlage (10), mit
einem Hohlrohr (46) zum axialen Einstecken in eine Rotorwelle (26) des Rotors, einem innerhalb des Hohlrohrs (46) vorgesehenen Teilungskörper (48),
wobei der Teilungskörper (48) zusammenmit dem Hohlrohr (46) zumindest zu einem Großteil voneinander getrennte Durchlassquerschnitte (54) begrenzt und
der jeweilige Durchlassquerschnitt (54) zur Durchführung von maximal einer der Phasenleitungen (36) dimensioniert ist.

2. Kabelführung (44) nach Anspruch 1, wobei das Hohlrohr (46) aus mindestens zwei separaten Schalenteilen (56) zusammengesetzt ist, wobei die Schalenteile (56) miteinander und/oder mit dem Teilungskörper (48) befestigt sind.

3. Kabelführung (44) nach Anspruch 2, wobei die Schalenteile (56) mit Hilfe eines Verbindungsmittels nach radial innen an dem Teilungskörper (48) angepresst sind.

4. Kabelführung (44) nach Anspruch 3, wobei die Schalenteile (56) eine nach radial außen geöffnete Aufnahmenut (60) zur Aufnahme des Verbindungsmittels aufweisen, wobei das Verbindungsmittel in radialer Richtung in der Aufnahmenut (60) vollständig versenkt aufgenommen ist.

5. Kabelführung (44) nach Anspruch 3 oder 4, wobei das Verbindmittel bandförmig ausgebildet ist.

6. Kabelführung (44) nach einem der Ansprüche 2 bis 5, wobei die Schalenteile (56) in Umfangsrichtung an dem Teilungskörper (48) anliegen.

7. Kabelführung (44) nach einem der Ansprüche 1 bis 6, wobei der Teilungskörper (48) einen Zentralbereich (50) und von dem Zentralbereich (50) nach radial außen abstehende Trennstege (52) aufweist.

8. Kabelführung (44) nach einem der Ansprüche 1 bis 7, wobei die Phasenleitung (36) in dem zugehörigen Durchlassquerschnitt (54) fixiert ist.

9. Kabelführung (44) nach einem der Ansprüche 1 bis 8, wobei die jeweilige Phasenleitung (36) an mindestens einem Ende einen durch Crimpen angepressten Kontaktanschluss (40) aufweist.

10. Rotor für einen Generator (20) einer Windkraftanlage (10), mit einem mindestens eine Wicklung aufweisenden Rotorkörper, einer mit dem Rotorkörper verbundenen Rotorwelle (26), wobei die Rotorwelle (26) einen zu einer Axialseite hin geöffneten Hohlraum (30) aufweist, und einer in den Hohlraum (30) der Rotorwelle (26) axial eingesteckten Kabelführung (44) nach einem der Ansprüche 1 bis 9, wobei die Phasenleitungen (36) durch die Rotorwelle (26) nach radial außen geführt und mit der jeweiligen Wicklung kontaktiert sind.

11. Rotor nach Anspruch 10, wobei mindestens zwei in axialer Richtung hintereinander in dem Hohlraum (30) der Rotorwelle (26) angeordnete separat axial einführbare Kabelführungen (44) vorgesehen sind, wobei die Kabelführungen (44) sich dieselben Phasenleitungen (36) teilen.

12. Generator (20) für eine Windkraftanlage (10), mit einem Stator, einem mit dem Stator zusammenwirkenden Rotor nach Anspruch 10 oder 11 und einer, insbesondere als Schleifringanordnung ausgestalten, Kontaktierungseinheit zur elektrischen Kontaktierung der von dem Rotorkörper wegweisenden Enden der Phasenleitungen (36).

13. Verwendung einer Kabelführung (44) nach einem der Ansprüche 1 bis 9 zur Reparatur von durch Kabelbrand beschädigten Phasenleitungen (36) eines Rotors eines Generators (20) für eine Windkraftanlage (10).

14. Verfahren zur Reparatur von Phasenleitungen (36) eines Rotors eines Generators (20) für eine Windkraftanlage (10), bei dem die beschädigte Phasenleitung (36) von dem übrigen Rotor getrennt wird, die beschädigte Phasenleitung (36) aus einer Rotorwelle (26) des Rotors entfernt wird, während die Rotorwelle (26) in einer im Wesentlichen horizontalen Ausrichtung verbleibt und nachfolgend eine Kabelführung (44) nach einem der Ansprüche 1 bis 9 in axialer Richtung in die Rotorwelle (26) eingesteckt wird, während die Rotorwelle (26) in einer im Wesentlichen horizontalen Ausrichtung verbleibt, um den Rotor nach Anspruch 10 oder 11 zu erhalten.

15. Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in der Kabelführung (44) nach einem der Ansprüche 1 bis 9 vorgesehenen Bestandteile, wobei die Datenpakete dazu hergerichtet sind
bei einer Verarbeitung durch eine Datenverarbeitungseinrichtung zum Betrieb einer Werkzeugmaschine zur additiven Fertigung von Vorrichtungen eine additive Herstellung der Bestandteile der Kabelführung, insbesondere durch 3D-Druck, durchzuführen
und/oder
bei einer Verarbeitung durch eine Datenverarbeitungseinrichtung zur Durchführung einer technischen Simulation eine Simulation der Funktionsweise der Kabelführung (44) durchzuführen und hierbei erzeugte Simulationsergebnisse für eine weitere Verwendung auszugeben, insbesondere zu dem Zweck einen Dauerfestigkeitsnachweis in Abhängigkeit veränderlicher Lasten und/oder veränderlicher Temperaturbelastungen zu erbringen.
